# EUROPÄISCHE PATENTANMELDUNG

(11) **EP 1 072 913 A1**
(43) Veröffentlichungstag der Anmeldung: **31.01.2001**
(21) Anmeldenummer: 00115580.3
(22) Anmeldetag: 19.07.2000
(51) Int. Cl.: G02B 6/38

(54) **Steckverbinder**

(30) Priorität: 28.07.1999 DE 19935482
(71) Anmelder: Delphi Technologies, Inc., Troy, MI 48007 (US)
(72) Erfinder: Halbach, Paul Gerhard, 42369 Wuppertal (DE); Haack, Albrecht, 42369 Wuppertal (DE); Schekalla, Peter, 42329 Wuppertal (DE); Uc, Kamil, 42115 Wuppertal (DE)
(74) Vertreter: Manitz, Finsterwald & Partner

(57) **Zusammenfassung**

Ein Steckverbinder 10 für Lichtleiter umfaßt ein Aufnahmeteil 12, in das wenigstens eine optische Ferrule 14 einsteckbar ist. Dabei ist die Ferrule 14 in einen an seinen beiden Enden offenen axialen Hohlraum 16 des Aufnahmeteils 12 einsteckbar ist, der im Bereich seines der Einsteckseite E zugewandten hinteren Endes durch einen mit einem Grundkörper 18 des Aufnahmeteils 12 verbundenen relativ starren Wandungabschnitt 20 und zu seinem freien vorderen Ende hin zumindest teilweise durch einen relativ flexiblen Wandungsabschnitt 22 radial begrenzt ist, der wenigstens ein sich allgemein in Axialrichtung x erstreckendes federndes Verriegelungselement 24 bildet, das am vorderen freien Ende entgegen der Federkraft allgemein radial nach außen auslenkbar und mit wenigstens einem allgemein radial nach innen gerichteten Vorsprung 26 versehen ist, der mit einer Verriegelungsfläche 28 der Ferrule 14 in Eingriff bringbar ist sowie gleichzeitig eine Anschlagsfläche 30 für die Ferrule 14 bildet.

## Beschreibung

Die Erfindung betrifft einen Steckverbinder für Lichtleiter, mit einem Aufnahmeteil, in das wenigstens eine optische Ferrule, d.h. ein optisches Terminal, einsteckbar ist.

Die Funktionsfähigkeit von Lichtleiter-Steckverbindern ist von der gegenseitigen Ausrichtung der optischen Komponenten abhängig. Eine fehlerhafte Ausrichtung dieser Komponenten kann zu größeren Lichtverlusten führen und demzufolge die Funktionsfähigkeit des gesamten Lichtleitersysterns beeinträchtigen. Um dies zu verhindern, müssen nicht nur die radialen, sondern insbesondere auch die axialen Toleranzen, d.h. die axialen Abstände zwischen den beiden jeweils miteinander zu verbindenden optischen Komponenten eingehalten werden. Hierzu ist also insbesondere auch eine entsprechend genaue Positionierung der Ferrule erforderlich.

Ziel der Erfindung ist es, einen Steckverbinder der eingangs genannten Art zu schaffen, der bei einfachem und kompaktem Aufbau auf einfache und zuverlässige Weise eine möglichst genaue Ausrichtung und Positionierung der Ferrule gewährleistet.

Diese Aufgabe wird nach der Erfindung dadurch gelöst, daß die Ferrule in einen an seinen beiden Enden offenen axialen Hohlraum des Aufnahmeteils einsteckbar ist, der im Bereich seines der Einsteckseite zugewandten hinteren Endes durch einen mit einem Grundkörper des Aufnahmeteils verbundenen relativ starren Wandungsabschnitt und zu seinem freien vorderen Ende hin zumindest teilweise durch einen relativ flexiblen Wandungsabschnitt radial begrenzt ist, der wenigstens ein sich allgemein in Axialrichtung erstreckendes federndes Verriegelungselement bildet, das am vorderen freien Ende entgegen der Federkraft allgemein radial nach außen auslenkbar und mit wenigstens einem allgemein radial nach innen gerichteten Vorsprung versehen ist, der mit einer Verriegelungsfläche der Ferrule in Eingriff bringbar ist sowie gleichzeitig eine Anschlagsfläche für die Ferrule bildet.

Aufgrund dieser Ausbildung wird der sich bezüglich der optischen Funktion ergebende Toleranzbereich auf ein Minimum reduziert, so daß nach einem jeweiligen Zusammenstecken der betreffenden Verbinderteile stets eine optimale Funktion gewährleistet ist. Es ergibt sich insgesamt ein einfacher sowie kompakter und damit kostengünstiger Aufbau des Steckverbinders, der überdies auf einfache und zuverlässige Weise eine sehr genaue Ausrichtung und Positionierung der Ferrule sicherstellt. Durch den in der angegebenen Weise ausgeführten Hohlraum ist nicht nur ein korrektes Ausrichten sowie eine automatische Verriegelung der Ferrule gewährleistet, durch das bzw. die zugeordneten Verriegelungselemente wird gleichzeitig auch eine Anschlagsfläche gebildet, durch die die Ferrule zur Einhaltung der axialen Toleranzen entsprechend axial positionierbar ist.

Bei einer bevorzugten Ausführungsform des erfindungsgemäßen Steckverbinders sind die Hohlraumwandung und entsprechend das Verriegelungselement einstückig mit dem Grundkörper des Aufnahmeteils ausgebildet.

Zweckmäßigerweise sind wenigstens zwei einander gegenüberliegende federnde Verriegelungselemente vorgesehen. Dabei kann die Wandung des Hohlraumes beispielsweise aus zwei im Querschnitt jeweils halbkreisförmigen Schalenhälften bestehen.

Bei einer bevorzugten praktischen Ausführungsform des erfindungsgemäßen Steckverbinders ist das Aufnahmeteil mit einer Zweitverriegelung versehen, die aus einer Vormontagestellung, in der sie ein radiales Auslenken des wenigstens einen Verriegelungselements beim Einstecken der Ferrule zuläßt, in wenigstens eine weitere Stellung bewegbar ist, in der sie das mit der Verriegelungsfläche der eingesteckten Ferrule in Eingriff stehende Verriegelungselement daran hindert, radial nach außen ausgelenkt zu werden. Dabei ist die Zweitverriegelung zweckmäßigerweise durch eine auf die Wandung des Hohlraums aufschiebbare Hülse gebildet, die einen ein radiales Auslenken des Verriegelungselements zulassenden Abschnitt größeren Innendurchmessers und einen ein solches Auslenken verhindernden Abschnitt kleineren Innendurchmessers umfaßt und axial aus der Vormontagestellung in die wenigstens eine weitere Stellung verschiebbar ist. Die Vormontagestellung der hülsenartigen Zweitverriegelung kann zweckmäßigerweise durch wenigstens eine mit einem betreffenden Vorsprung des Grundkörpers des Aufnahmeteils zusammenwirkende, am Außenumfang der hülsenartigen Zweitverriegelung vorgesehene Nut definiert sein.

Bei einer zweckmäßigen praktischen Ausführungsform ist auf die den Hohlraum begrenzende Wandung eine Druckfeder aufgeschoben, die innerhalb des Abschnitts größeren Innendurchmessers der hülsenartigen Zweitverriegelung angeordnet und an einem dem hinteren Bereich der Hohlraumwandung vorgesehenen radialen Anschlag abgestützt ist.

Von Vorteil ist auch, wenn die Verriegelungsfläche der Ferrule durch eine an der Ferrule vorgesehene Nut gebildet ist, die durch eine hintere radiale Wand begrenzt ist, mit der die eingesteckte Ferrule an der radialen Anschlagsfläche des Verriegelungselements anliegt. Bei der Nut kann es sich beispielsweise um eine Umfangsnut handeln. Der Nutboden ist bezüglich der Axialrichtung vorzugsweise geneigt.

Ist die an der Ferrule vorgesehene Nut durch eine Umfangsnut gebildet, so kann der betreffende Abschnitt der Ferrule zweckmäßigerweise einen sich kegelstumpfartig nach vorne verjüngenden Verlauf besitzen.

Der am Verriegelungselement vorgesehene Vorsprung besitzt vorzugsweise eine mit dem Nutboden zusammenwirkende radial innere Fläche, deren Neigung bezüglich der Axialrichtung zumindest im wesentlichen der des Nutbodens entspricht.

Bei einer zweckmäßigen praktischen Ausführungsform des erfindungsgemäßen Steckverbinders besitzt die Ferrule vor der Nut einen zylindrischen Abschnitt kleineren Außendurchmessers und hinter der Nut einen zylindrischen Abschnitt größeren Außendurchmessers, wobei das federnde Verriegelungselement beim Einstecken der Ferrule durch deren zylindrischen Abschnitt kleineren Durchmessers radial nach außen auslenkbar und die mit der Anschlagsfläche des Verriegelungselements zusammenwirkende hintere radiale Wand der Nut durch die angrenzende stirnseitige Ringwand des zylindrischen Abschnitts größeren Durchmessers der Ferrule gebildet ist.

Die Ferrule ist zweckmäßigerweise mit einem vorderen axialen Ansatz versehen, dessen Außendurchmesser kleiner ist als der des vor der Nut vorgesehenen zylindrischen Abschnitts, wobei der axiale Ansatz vorzugsweise über eine Auflaufschräge in diesen zylindrischen Abschnitt übergeht.

Die Erfindung wird im folgenden anhand eines Ausführungsbeispiels unter Bezugnahme auf die Zeichnung näher erläutert; in dieser zeigen:
- Figur 1: eine schematische, teilweise geschnittene Seitenansicht eines Steckverbinders für Lichtleiter bei in das Aufnahmeteil eingesteckter Ferrule, wobei die Zweitverriegelung noch ihre Vormontagestellung einnimmt,
- Figur 2: eine schematische, teilweise geschnittene Seitenansicht des Steckverbinders bei in das Aufnahmeteil eingesteckter Ferrule, wobei die Zweitverriegelung aus ihrer Vormontagestellung heraus in eine Sicherungsstellung bewegt wurde,
- Figur 3: eine schematische aufgeschnittene perspektivische Darstellung des den Hohlraum umfassenden Aufnahmeteils des Steckverbinders und
- Figur 4: eine schematische perspektivische Darstellung der Ferrule.

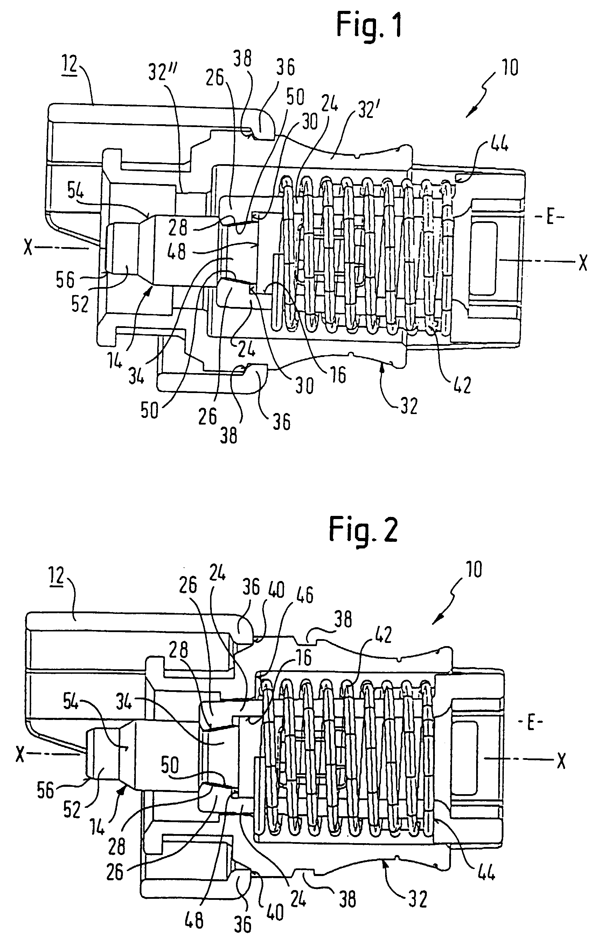

Die Figuren 1 bis 4 zeigen in schematischer, teilweise geschnittener Darstellung einen Steckverbinder 10 für Lichtleiter. Dieser Steckverbinder 10 umfaßt ein Aufnahmeteil 12, in das wenigstens eine optische Ferrule 14 einsteckbar ist.

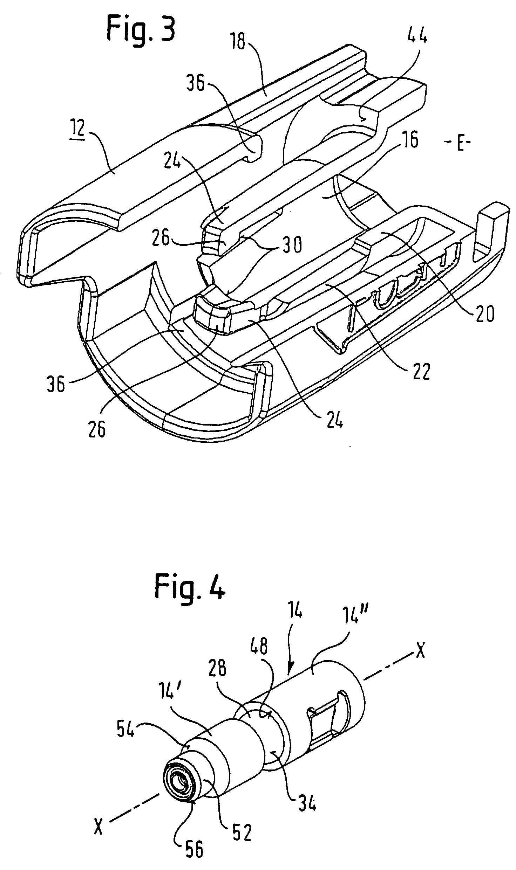

Die Ferrule 14 ist in einen in besonderer Weise ausgebildeten, an seinen beiden Enden offenen axialen Hohlraum 16 des Aufnahmeteils 12 einsteckbar. Dieser Hohlraum 16 ist im Bereich seines der Einsteckseite E zugewandten hinteren Endes durch einen mit einem Grundkörper 18 des Aufnahmeteils 12 verbundenen relativ starren Wandungsabschnitt 20 und zu seinem freien vorderen Enden hin zumindest teilweise durch einen relativ flexiblen Wandungsabschnitt 22 radial begrenzt (vgl. insbesondere Figur 3).

Der flexible Wandungsabschnitt 22 bildet zwei einander gegenüberliegende, sich jeweils allgemein in Axialrichtung x erstreckende federnde Verriegelungselemente 24, die am vorderen freien Ende entgegen der Federkraft jeweils allgemein radial nach außen auslenkbar und jeweils mit wenigstens einem allgemein radial nach innen gerichteten Vorsprung 26 versehen sind, der mit einer Verriegelungsfläche 28 der Ferrule 14 in Eingriff bringbar ist. Zudem bilden die Vorsprünge 26 der beiden Verriegelungselemente 24 eine flache radiale Anschlagsfläche 30 für die Ferrule 14, durch die die Einsteckbewegung der Ferrule 14 axial begrenzt wird.

Wie insbesondere anhand der Figur 3 zu erkennen ist, sind die Hohlraumwandung 20, 22 und entsprechend die Verriegelungselemente 24 einstückig mit dem Grundkörper 18 des Aufnahmeteils 12 ausgebildet.

Die Wandung 20, 22 des Hohlraumes 16 kann zweckmäßigerweise aus zwei im Querschnitt jeweils halbkreisförmigen Schalenhälften bestehen.

Wie insbesondere anhand der Figuren 1 und 2 zu erkennen ist, ist das Aufnahmeteil 12 mit einer Zweitverriegelung 32 versehen. Diese Zweitverriegelung 32 ist aus einer in der Figur 1 dargestellten Vormontagestellung, in der sie ein radiales Auslenken der beiden Verriegelungselemente 24 beim Einstecken der Ferrule 14 zuläßt, in wenigstens eine weitere Stellung bewegbar (vgl. insbesondere Figur 2), in der sie die mit der Verriegelungsfläche 28 der eingesteckten Ferrule 14 in Eingriff stehenden Verriegelungselemente 24 daran hindert, radial nach außen ausgelenkt zu werden.

Im vorliegenden Fall ist die Zweitverriegelung 32 durch eine auf die Wandung 20, 22 des Hohlraums 16 aufgeschoben Hülse gebildet, die einen ein radiales Auslenken der Verriegelungselemente 24 zulassenden Abschnitt 32' größeren Innendurchmessers und einen ein solches Auslenken verhindernden Abschnitt 32'' kleineren Innendurchmessers umfaßt und axial aus der Vormontagestellung (vgl. Figur 1) nach rechts in die wenigstens eine weitere Stellung verschiebbar ist (vgl. Figur 2). Aus den beiden Figuren 1 und 2 ergibt sich auch, daß die Zweitverriegelung 32 erst dann aus der Vormontagestellung heraus nach rechts verschiebbar ist, wenn die Ferrule 14 vollständig in das Aufnahmeteil 12 eingesteckt ist und die Vorsprünge 26 in eine an der Ferrule 14 vorgesehene, die Verriegelungsfläche 28 bildende Nut 34 eingerastet sind.

Die Vormontagestellung der hülsenartigen Zweitverriegelung ist durch zwei mit einem jeweiligen Vorsprung 36 des Grundkörpers 18 des Aufnahmeteils 12 zusammenwirkende, am Außenumfang der hülsenartigen Zweitverriegelung 32 vorgesehene Nuten 38 definiert.

Nachdem die Zweitverriegelung 32 aus der Vormontagestellung heraus nach rechts verschoben wurde, ist sie durch mit den Vorsprüngen 36 zusammenwirkende radiale Anschlagsflächen 40 daran gehindert, ungewollt wieder so weit nach links verschoben zu werden, daß eine radiale Auslenkung der federnden Verriegelungselemente 24 wieder möglich ist. Dagegen kann die Zweitverriegelung 32 ausgehend von der in der Figur 2 dargestellten Sicherungsstellung entgegen der Kraft einer Druckfeder 42 weiter nach rechts verschoben werden, ohne daß dadurch die federnden Verriegelungselemente 24 freigegeben werden.

Wie anhand der Figuren 1 und 2 zu erkennen ist, ist die Druckfeder 42 auf die den Hohlraum 16 begrenzende Wandung 20, 22 aufgeschoben. Dabei ist sie innerhalb des Abschnitts 32' größeren Innendurchmessers der hülsenartigen Zweitverriegelung 32 angeordnet und an einem im hinteren Bereich der Hohlraumwandung 20, 22 vorgesehenen radialen Anschlag 44 abgestützt ist. Das andere Ende der Druckfeder 42 wird von der zwischen den beiden Abschnitten 32' und 32'' der Zweitverriegelung 32 gebildeten Stufe 46 (vgl. insbesondere Figur 2) beaufschlagt, sobald die Zweitverriegelung 32 ausgehend von der in der Figur 2 dargestellten Sicherungsstellung weiter nach rechts verschoben wird.

Die an der Ferrule 14 vorgesehene, die Verriegelungsfläche 28 bildende Nut 34 ist durch eine hintere radiale Wand 48 begrenzt, mit der die eingesteckte Ferrule 14 an der radialen Anschlagsfläche 30 der Verriegelungselemente 24 anliegt. Die Nut 34 ist im vorliegenden Fall durch eine Umfangsnut gebildet. Der die Verriegelungsfläche 28 bildende Nutboden ist bezüglich der Axialrichtung x geneigt. Dazu besitzt der betreffende Abschnitt der Ferrule 14 einen sich kegelstumpfartig nach vorne verjüngenden Verlauf.

Die an den beiden Verriegelungselementen 24 vorgesehenen Vorsprünge 26 besitzen jeweils eine mit dem Nutboden 28 zusammenwirkende radial innere Fläche 50, deren Neigung bezüglich der Axialrichtung x zumindest im wesentlichen der des Nutbodens 28 entspricht.

Im vorliegenden Fall besitzt die Ferrule 14 vor der Nut 34 einen zylindrischen Abschnitt 14' kleineren Außendurchmessers und hinter der Nut 34 einen zylindrischen Abschnitt 14'' größeren Außendurchmessers. Dabei sind die beiden federnden Verriegelungselemente 24 beim Einstecken der Ferrule 14 durch deren zylindrischen Abschnitt 14' kleineren Durchmessers radial nach außen auslenkbar, während die mit der Anschlagsfläche 30 der Verriegelungselemente 24 zusammenwirkende hintere radiale Wand 48 der Nut 34 durch die angrenzende stirnseitige Ringwand des zylindrischen Abschnitts 14'' größeren Durchmessers der Ferrule 14 gebildet ist.

Die Ferrule 14 ist mit einem vorderen axialen Ansatz 52 versehen, dessen Außendurchmesser kleiner ist als der des vor der Nut 34 vorgesehenen zylindrischen Abschnitts 14'. Der axiale Ansatz 52 geht über eine Auflaufschräge 54 in den zylindrischen Abschnitt 14' über. Auch am freien Ende des axialen Ansatzes 52 ist wieder eine Abschrägung 56 vorgesehen.

### Bezugszeichenliste

- 10: Steckverbinder
- 12: Aufnahmeteil
- 14: optische Ferrule
- 14': zylindrischer Abschnitt kleineren Außendurchmessers
- 14'': zylindrischer Abschnitt größeren Außendurchmessers
- 16: Hohlraum
- 18: Grundkörper
- 20: relativ starrer Wandungsabschnitt
- 22: flexibler Wandungsabschnitt
- 24: federnde Verriegelungselemente
- 26: Vorsprünge
- 28: Nutboden
- 30: Anschlagsfläche
- 32: Zweitverriegelung
- 32': Abschnitt größeren Durchmessers
- 32'': Abschnitt kleineren Durchmessers
- 34: Nut
- 36: Vorsprünge
- 38: Nuten
- 40: radiale Anschlagsflächen
- 42: Druckfeder
- 44: radialer Anschlag
- 46: Stufe
- 48: hintere radiale Wand
- 50: radial innere Flächen
- 52: axialer Ansatz
- 54: Auflaufschräge
- 56: Abschrägung
- x: Axialrichtung
- E: Einsteckseite

## Patentansprüche

1. Steckverbinder (10) für Lichtleiter, mit einem Aufnahmeteil (12), in das wenigstens eine optische Ferrule (14) einsteckbar ist,
dadurch **gekennzeichnet,**
daß die Ferrule (14) in einen an seinen beiden Enden offenen axialen Hohlraum (16) des Aufnahmeteils (12) einsteckbar ist, der im Bereich seines der Einsteckseite (E) zugewandten hinteren Endes durch einen mit einem Grundkörper (18) des Aufnahmeteils (12) verbundenen relativ starren Wandungabschnitt (20) und zu seinem freien vorderen Ende hin zumindest teilweise durch einen relativ flexiblen Wandungsabschnitt (22) radial begrenzt ist, der wenigstens ein sich allgemein in Axialrichtung (x) erstreckendes federndes Verriegelungselement (24) bildet, das am vorderen freien Ende entgegen der Federkraft allgemein radial nach außen auslenkbar und mit wenigstens einem allgemein radial nach innen gerichteten Vorsprung (26) versehen ist, der mit einer Verriegelungsfläche (28) der Ferrule (14) in Eingriff bringbar ist sowie gleichzeitig eine Anschlagsfläche (30) für die Ferrule (14) bildet.

2. Steckverbinder nach Anspruch 1,
dadurch **gekennzeichnet,**
daß die Hohlraumwandung (20, 22) und entsprechend das Verriegelungselement (24) einstückig mit dem Grundkörper (18) des Aufnahmeteils (12) ausgebildet sind.

3. Steckverbinder nach Anspruch 1 oder 2,
dadurch **gekennzeichnet,**
daß wenigstens zwei einander gegenüberliegende federnde Verriegelungselemente (24) vorgesehen sind.

4. Steckverbinder nach Anspruch 3,
dadurch **gekennzeichnet,**
daß die Wandung (20, 22) des Hohlraumes (16) aus zwei im Querschnitt jeweils halbkreisförmigen Schalenhälften besteht.

5. Steckverbinder nach einem der vorhergehenden Ansprüche,
dadurch **gekennzeichnet,**
daß das Aufnahmeteil (12) mit einer Zweitverriegelung (32) versehen ist, die aus einer Vormontagestellung, in der sie ein radiales Auslenken des wenigstens einen Verriegelungselements (24) beim Einstecken der Ferrule (14) zuläßt, in wenigstens eine weitere Stellung bewegbar ist, in der sie das mit der Verriegelungsfläche (28) der eingesteckten Ferrule (14) in Eingriff stehende Verriegelungselemente (24) daran hindert, radial nach außen ausgelenkt zu werden.

6. Steckverbinder nach Anspruch 5,
dadurch **gekennzeichnet,**
daß die Zweitverriegelung (32) durch eine auf die Wandung (20, 22) des Hohlraums (16) aufschiebbare Hülse gebildet ist, die einen ein radiales Auslenken des Verriegelungselements (24) zulassenden Abschnitt (32') größeren Innendurchmessers und einen ein solches Auslenken verhindernden Abschnitt (32'') kleineren Innendurchmessers umfaßt und axial aus der Vormontagestellung in die wenigstens eine weitere Stellung verschiebbar ist.

7. Steckverbinder nach Anspruch 6,
dadurch **gekennzeichnet,**
daß die Vormontagestellung der hülsenartigen Zweitverriegelung (32) durch wenigstens eine mit einem betreffenden Vorsprung (36) des Grundkörpers (18) des Aufnahmeteils (12) zusammenwirkende, am Außenumfang der hülsenartigen Zweitverriegelung (32) vorgesehene Nut (38) definiert ist.

8. Steckverbinder nach einem der vorhergehenden Ansprüche,
dadurch **gekennzeichnet,**
daß auf die den Hohlraum (16) begrenzende Wandung (20, 22) eine Druckfeder (42) aufgeschoben ist, die innerhalb des Abschnitts (32') größeren Innendurchmessers der hülsenartigen Zweitverriegelung (32) angeordnet und an einem im hinteren Bereich der Hohlraumwandung (20, 22) vorgesehenen radialen Anschlag (44) abgestützt ist.

9. Steckverbinder nach einem der vorhergehenden Ansprüche,
dadurch **gekennzeichnet,**
daß die Verriegelungsfläche (28) der Ferrule (14) durch eine an der Ferrule (14) vorgesehene Nut (34) gebildet ist, die durch eine hintere radiale Wand (48) begrenzt ist, mit der die eingesteckte Ferrule (14) an der radialen Anschlagsfläche (30) des Verriegelungselement (24) anliegt.

10. Steckverbinder nach Anspruch 9,
dadurch **gekennzeichnet,**
daß die Nut (34) durch eine Umfangsnut gebildet ist.

11. Steckverbinder nach einem der vorhergehenden Ansprüche,
dadurch **gekennzeichnet,**
daß der Nutboden (28) bezüglich der Axialrichtung (x) geneigt ist.

12. Steckverbinder nach Anspruch 10 und 11,
dadurch **gekennzeichnet,**
daß die Nut (34) durch eine Umfangsnut gebildet ist und der betreffende Abschnitt der Ferrule (14) einen sich kegelstumpfartig nach vorne verjüngenden Verlauf besitzt.

13. Steckverbinder nach einem der vorhergehenden Ansprüche,
dadurch **gekennzeichnet,**
daß der am Verriegelungselement (24) vorgesehene Vorsprung (26) eine mit dem Nutboden (28) zusammenwirkende radial innere Fläche (50) besitzt, deren Neigung bezüglich der Axialrichtung (x) zumindest im wesentlichen der des Nutbodens (28) entspricht.

14. Steckverbinder nach einem der vorhergehenden Ansprüche,
dadurch **gekennzeichnet,**
daß die Ferrule (14) vor der Nut (34) einen zylindrischen Abschnitt (14') kleineren Außendurchmessers und hinter der Nut (34) einen zylindrischen Abschnitt (14'') größeren Außendurchmessers besitzt, wobei das federnde Verriegelungselement (24) beim Einstecken der Ferrule (14) durch deren zylindrischen Abschnitt (14') kleineren Durchmessers radial nach außen auslenkbar und die mit der Anschlagsfläche (30) des Verriegelungselements (24) zusammenwirkende hintere radiale Wand (48) der Nut (34) durch die angrenzende stirnseitige Ringwand des zylindrischen Abschnitts (14'') größeren Durchmessers der Ferrule (14) gebildet ist.

15. Steckverbinder nach einem der vorhergehenden Ansprüche,
dadurch **gekennzeichnet,**
daß die Ferrule (14) mit einem vorderen axialen Ansatz (52) versehen ist, dessen Außendurchmesser kleiner ist als der des vor der Nut (34) vorgesehenen zylindrischen Abschnitts (14'), wobei der axiale Ansatz (52) über eine Auflaufschräge (54) in diesen zylindrischen Abschnitt (14') übergeht.
